Europäisches Patentamt

**European Patent Office**

Office européen des brevets

(19)

(11) Publication number: **0 125 010**
**A2**

(12) # EUROPEAN PATENT APPLICATION

(21) Application number: **84302288.0**

(22) Date of filing: **04.04.84**

(51) Int. Cl.³: **G 01 F 15/18**
**E 03 B 7/07**

(30) Priority: **05.04.83 GB 8309119**

(43) Date of publication of application:
**14.11.84 Bulletin 84/46**

(84) Designated Contracting States:
**AT BE CH DE FR GB IT LI LU NL SE**

(71) Applicant: **Hudson, David Rosser**
**7 Marine Parade**
**Penarth Glamorgan CF6 2BE(GB)**

(72) Inventor: **Hudson, David Rosser**
**7 Marine Parade**
**Penarth Glamorgan CF6 2BE(GB)**

(74) Representative: **Lainé, Simon James et al,**
**Wynne-Jones, Lainé & James Morgan Arcade Chambers**
**33, St.Mary Street**
**Cardiff CF1 2AB(GB)**

(54) **Improvements relating to fluid control and/or metering assemblies.**

(57) A fluid control and/or metering assembly (5, 10) is accommodated in a composite housing sunk into the ground. Access to the assembly is through a lid (2) which fits the upper end of an adjustable sleeve (40) telescoped over a rim (37) at the top of an upper housing (1). By fitting selected spacers (48) within, between the rim and a shoulder formation (42) on the sleeve, the lid can be made substantially flush with the ground. The upper housing seats in a lower housing (21) fitted around pipes (33, 34), which are laid horizontally and turn upwards at elbows within the lower housing for their ends to have a sliding entry into the assembly. This lower housing ensures the necessary vertical alignment, while allowing for limited relative movement between the pipes and the housing both vertically and skewing about a vertical axis. Free space within the housing is packed with insulation (36, 47, 48).

FIG. 5.

EP 0 125 010 A2

0125010

"Improvements Relating to Fluid Control and/or

Metering Assemblies"


This invention relates to fluid control
and/or metering assemblies, and is a development of that
described in my European Application No. 83306002.3. That
is concerned with housing a stop-cock and water meter in
a box which is usually buried in the ground and accessible
through a lid flush with the surface.  That itself is a
progression from the assembly described in my European
Application No. 82301596.1.

Pipes have to be led into and out of such a
box, but one standard Water Board requirement is that
there should be adequate insulation down to a depth of
at least 750 mm.  To avoid insulating the entire pipe,
therefore, it is convenient to lay it at a greater depth,
and to bring it up near the surface only locally, as for
example to the assemblies referred to above.  Only short
lengths then require insulation.

Another requirement is that the connection
between the pipes and the assembly should allow for
slight ground movement and settling.

SL/JC

A further problem is that the lid of the box should be flush with the surface of the ground, particularly if the box is set into a pavement or roadway. If the lid seats firmly, as it should, it will have a fixed position relative to the box, which will therefore have to be sunk to a very precise depth in order to make the lid flush with the ground surface. That is not always easy to achieve, and in any event when resurfacing of a pavement, for example, takes place, the levels change leaving the lid proud or sunk.

It is therefore the aim of this invention to provide an assembly which can accommodate to ground movement and differing surface levels, and which can provide the necessary insulation above the critical depth.

According to one aspect of the present invention there is provided a fluid control and/or metering assembly comprising a top-lidded housing for burying upright in the ground, with access through the top to control or metering apparatus therein, the upper end of the housing having a surrounding vertically adjustable sleeve providing at its upper end a seat for the lid.

Sealing means will generally be interposed between the sleeve and the housing, and the sleeve will normally be made captive to the housing so that its range of movement is limited. It might be possible to have infinitely fine adjustment, as by screw action, but it is preferred to have some means such as removable spacers by which the adjustment can be carried out step-by-step. That will be sufficient for practical purposes.

The housing and the underside of the lid can accommodate insulation in blocks, and additional insulating plates can be provided so that a stack can be added to or reduced in accordance with the sleeve setting.

According to another aspect of the present invention there is provided a fluid control and/or metering assembly comprising a top-lidded housing for burying upright in the ground, with access through the top to control or metering apparatus therein, and a supporting box for burying beneath the housing and forming a seat for it, the combined box and housing providing aligned guide means for leading inlet and outlet pipes vertically into and out from the housing and allowing relative vertical movement between the pipes and the housing and box assembly, and the box providing an insulating space around the pipes.

The lower end of the box will be below the critical depth of 750 mm, or whatever the regulations demand, and conveniently the inlet pipe will enter it generally horizontally and turn upwards at an elbow to lead towards the housing. The outlet pipe will have a similar configuration. The pipes will pass into and

SL/JC

out of the box through apertures which will allow relative vertical movement between the pipes and the box, and preferably also a certain amount of skewing movement about a vertical axis.

Preferably, the vertical movement allowed by the box will be less than that allowed by the housing, where the pipe ends closely fit vertical bores. Thus, the end faces of the pipes will not come into abutment with anything and will not be at risk of distortion or damage.

Conveniently, the elbows will be in chambers separated from the main portion of the box, the vertical end section of each pipe passing with a close sliding fit through an aperture which provides part of the guide means. These chambers may also provide vertical walls backing the elbows to give support to each pipe when horiztonal forces are applied, as when making a pipe connection remote from the box.

The main portion of the box will be packed with insulation, and conveniently the box will be made in mirror-image halves which will be brought together and secured around the base of the housing and pipes already positioned and fitted into the housing.

For a better understanding of the invention some embodiments will now be described, by way of example, with reference to the accompanying drawings, in which:

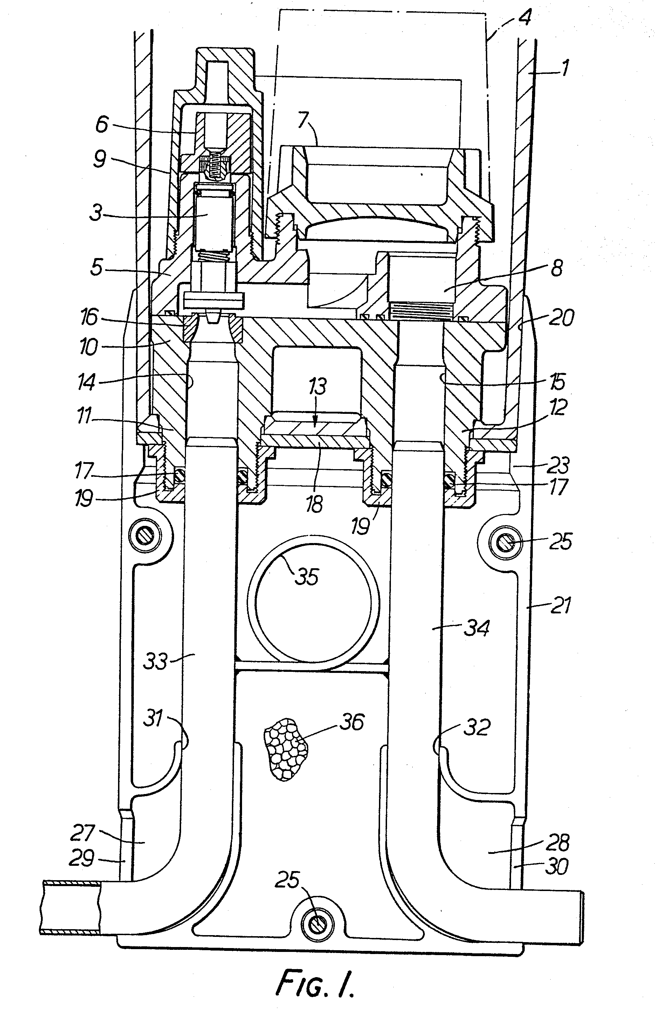

Figure 1 is a vertical section through the

SL/JC

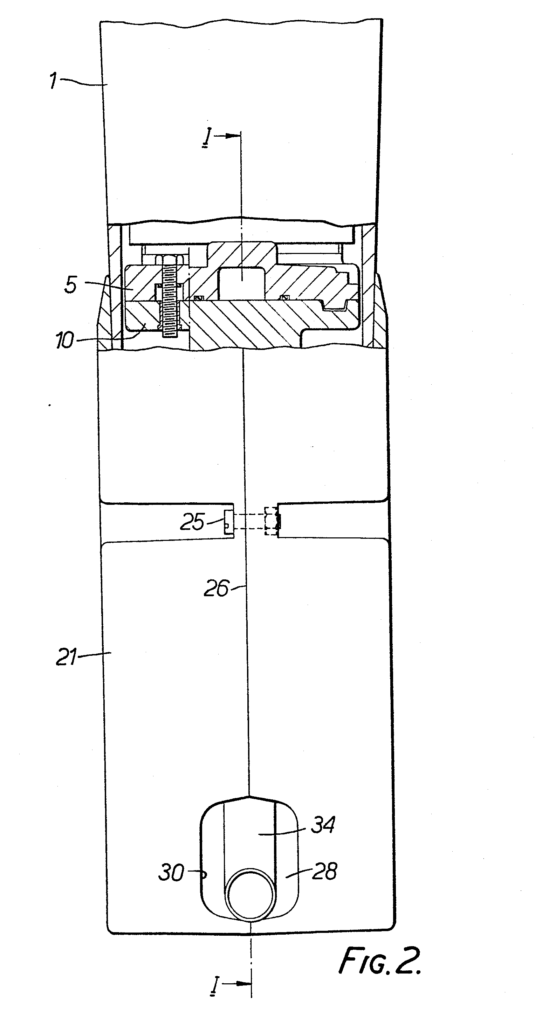

base of a stop-cock and meter housing and a supporting box, the section being on the line I-I of Figure 2,

Figure 2 is a side elevation of the structure of Figure 1,

Figure 3 is a plan view of a half portion of the box

Figure 4 is a section on the line IV-IV of Figure 3,

Figure 5 is a vertical section through the upper portion of the stop-cock and meter housing, the section being on the line V-V of Figure 6, and

Figure 6 is a side elevation of the upper portion of the housing.

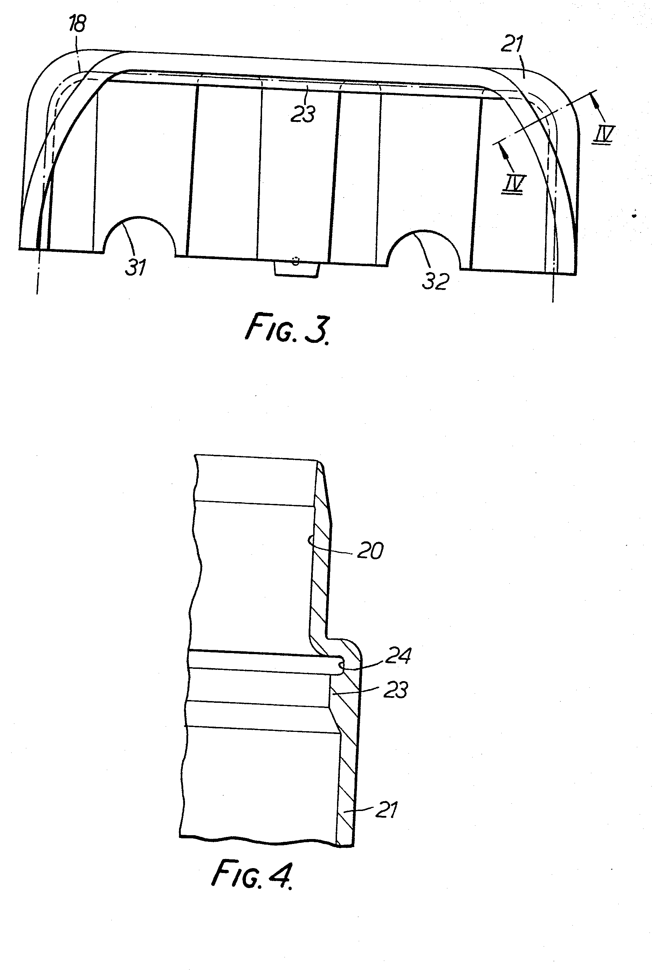

A housing 1, of slightly tapered tubular form with two opposed flattened sides(the cross-seciton being indicated in Figure 3 which shows part of a matching box), is buried in the ground so that its top, described in more detail later and closable by a lid 2, is substantially flush with the surface. At its lower end, it contains a stop-cock 3 and an optional meter 4 substantially as described in previous applications. An upper manifold 5 carries the movable element of the stop-cock, which is operated by knob 6, and a screw cap 7 in the absence of a meter, which is indicated by a broken line only. There is a non-return valve in port 8, and the stop-cock is shielded by a removable cover 9.

The upper manifold 5 has a largely horizontal interface with a lower manifold 10, which is basically a plate with two downwardly extending spigots 11 and 12, stepped to seat in apertures in the base 13 of the housing. The two manifolds are bolted together, as shown in Figure 2. Vertical cylindrical bores 14 and 15, stepped inwardly at their upper ends extend through the spigots to the interface, the bore 14 being completed by an insert 16 providing a valve seat for the stop-cock. Sealing rings 17 are provided internally at the lower ends of the spigots, which extend below the base 13 and through an adaptor plate 18, the assembly being secured by retaining nuts 19. The plate 18 largely matches the profile of the base 13, but as seen in outline in Figure 3, it projects at the corners to form retaining lugs. These could be moulded integrally with the housing, but the clamped plate is simpler.

The housing 1 seats in a well 20 at the top of a more deeply buried box 21, the plate 18 resting on a shoulder 23 and its corners engaging in recesses 24, thus making the housing captive to the box. This is formed from two identical moulded halves arranged mirror fashion to join in the sectional plane of Figure 1, the assembly being carried out after the pipes have been connected to the housing 1. For convenience, the box 21 will be referred to mostly hereafter as an integral structure,

SL/JC

0125010

as completed around the pipes and secured by bolts 25. The join is visible as line 26 in Figure 2.

At the lower end of the box 21 there are two opposed chambers 27 and 28 with slots 29 and 30 opening them to the exterior, and with circular interior apertures 31 and 32, coaxially aligned directly beneath the bores 14 and 15. An inlet pipe 33 enters the chamber 27 horizontally through slot 29 and turns upwards at an elbow within the chamber to extend through the aperture 31 into the bore 14. The vertical section of the pipe 33 is kept in alignment with the bore 14 by the aperture 31 but it is free to move up and down, the lowermost position being shown here. The slot 29 is dimensioned to accommodate this, but its vertical extent is not so much that the top of the pipe will abut against the shoulder where the bore 14 narrows. The slot 29 preferably has a width somewhat greater than the pipe diameter as shown in Figure 2, so that slight skewing of the box relative to the pipework is permitted.

An outlet pipe 34 has a similar relationship with the chamber 28 and the bore 15. The pipes are electrically connected by an earthing wire 35.

Before the housing 1 is fitted, the interior of the box 21 may be filled with an insulating material 36 which will not adhere to the exterior of the pipes and restrict vertical movement. The secondary chambers 27

SL/JC

and 28 will generally be below the critical level of 750 mm and will not require insulation. The pipes 33 and 34 are a close sliding fit in the apertures 31 and 32 and water from saturated ground will not have access to the main chamber of the box. The sealing rings 17, past which the upper ends of the pipes are pressed as the housing 1 is seated, keep the piped water confined to the manifold block 5, 10.

However, this insulation may not be essential, and an alternative approach is to omit it and leave an air space around the pipes. Indeed, the base of the box might then be removed, making it open ended at the bottom to allow geothermal heat to permeate up and keep the pipes from freezing.

It will be noted that the lower part of each vertical section of the pipes abuts against the inside vertical wall of the respective chamber 27 or 28. Thus, when a connection is made to the horizontal section of pipe 33 or 34, it is provided with a firm backing which allows horizontal pressures to be applied without risk of distortion.

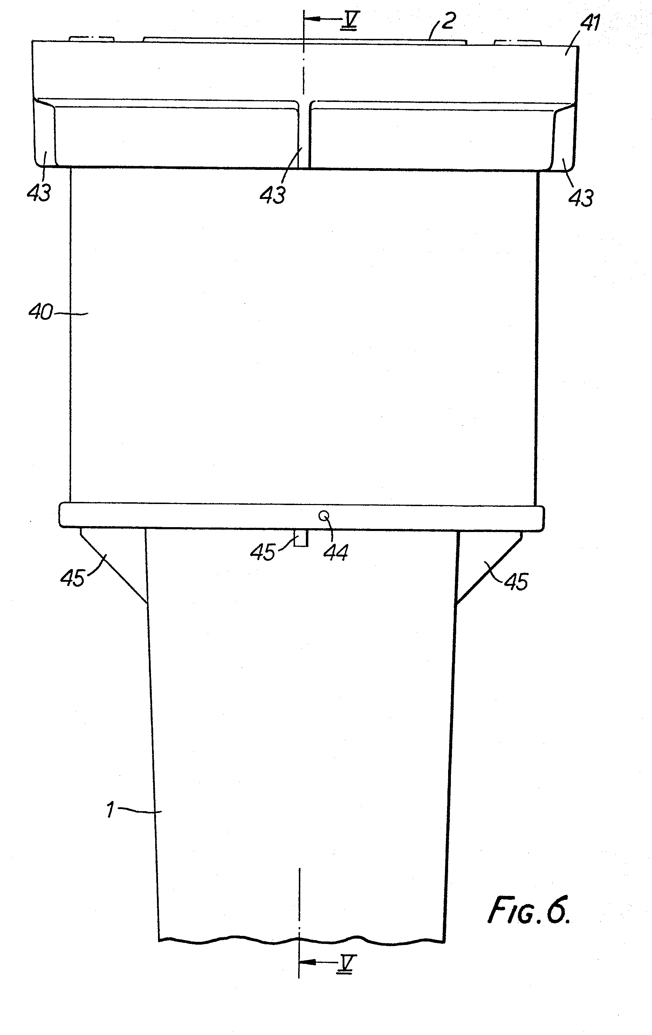

Referring now to Figures 5 and 6, these show an arrangement for compensating for variations in surface level.

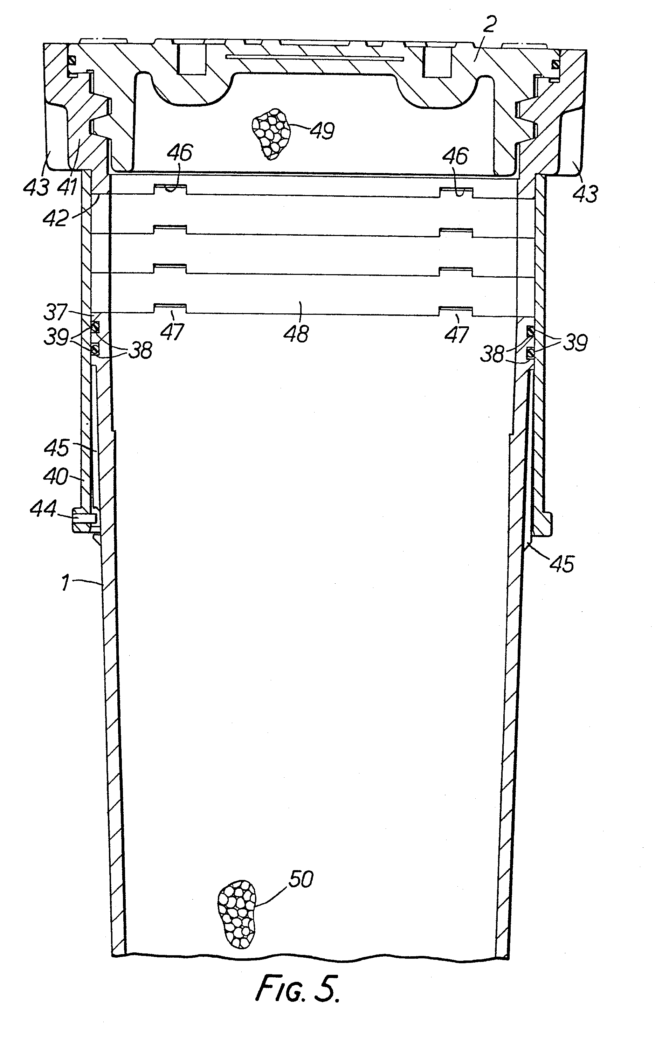

The housing 1 has an annular upper rim 37, with exterior grooves 38 housing O-ring seals 39. They co-operate with the inner surface of a tubular housing

SL/JC

extension sleeve 40 to whose upper end is attached an internally threaded rim piece 41, which receives the lid 2. It also provides a downwardly facing shoulder 42 directly over the upper face of the rim 37, and it has external ribs 43 in an undercut rebate. These will anchor the sleeve against rotation, particularly when the lid is screwed in or out. At its lower end, the sleeve 40 is fitted with inwardly projecting pins 44, one of which is shown in Figure 4, to engage under the lip of the rim 37 and keep the sleeve captive to the housing. Below the rim 37 there are circumferentially spaced fins 45 which act as guides for the sleeve, the fins necessarily being larger, as shown in Figure 6, over the flattened sides of the housing.

The shoulder 42 has recesses 46 at circumferential intervals and the upper face of the rim 37 has complementary projections 47 so that the two can closely engage in the lowermost position of the sleeve 40. However, this is not always appropriate and the lid 2 may need to be raised to become flush with the ground surface. The sleeve 40 can be eased up and spacer rings 48 inserted between the rim 37 and shoulder 42, these having similar recesses and projections on opposite faces to register accurately in position. The rings 48 may be sufficiently resilient to be sprung through the lesser diameter mouth of the rim piece 41, or they may be sectional, for example 180$^{o}$ arcs, so that they can be assembled within the sleeve.  While this is being carried out, the sleeve will be kept in a raised position by the friction of the seals 39.  When sufficient spacer rings 48 are in place, the sleeve 40 is pressed down so that the shoulder 42 engages the top of the stack.  Removal of one or more rings to lower the lid level follows the reverse sequence.

The circumferential spacing of the projections and recesses means that sectional rings can be built up brick fashion with the sections overlapping, thus aiding stability.

The underside of the lid is packed with insulation 49, as is the free space within the housing 1.  This will preferably be a removable block 50, and insulating plates or discs (not shown) may be provided to make up when spacer rings are inserted.

CLAIMS

1. A fluid control and/or metering assembly comprising a top lidded housing (1) for burying upright in the ground, with access through the top to control or metering apparatus (5,10) therein, characterised in that the upper end of the housing has a surrounding vertically adjustable sleeve (40) providing at its upper end a seat (41) for the lid (2).

2. An assembly as claimed in claim 1, characterised in that sealing means (39) are interposed between the sleeve and the housing, and means (44) hold the sleeve captive to the housing so that its range of movement is limited.

3. An assembly as claimed in claim 1 or 2, characterised in that removable spacers (48) are provided for positioning between the sleeve and the housing to achieve the desired adjustment.

4. An assembly as claimed in claim 3, characterised in that the spacers are rings (48) which can stack on the upper end (37) of the housing and support the sleeve (40) by engaging an inwardly projecting formation (42) thereon, the rings being complete and deformable for entry through the upper end of the sleeve or being made up from separable sections.

5. An assembly as claimed in claim 4, characterised in that adjacent rings have positive interengagement.

6. An assembly as claimed in any preceding claim, characterised in that free spaces in the housing are substantially filled within insulating material, preferably in block form with additional insulating plates to be added or removed in accordance with the adjustment of said sleeve.

7. A fluid control and/or metering assembly comprising a top lidded housing (1) for burying upright in the ground, with access through the top to control or metering apparatus (5,10) therein, characterised by a supporting box (21) for burying beneath the housing and forming a seat (20) for it, the combined box and housing providing aligned guide means (14, 31;15, 32) for leading inlet and outlet pipes (33,34) vertically into and out from the housing and allowing relative vertical movement between the pipes and the housing and box assembly, and the box providing an insulating space around the pipes.

8. An assembly as claimed in claim 7, characterised in that the inlet and outlet pipes enter the box generally horizontally through apertures (29,30) which allow relative vertical movement between the pipes and the box (less than such movement allowed by the housing), and relative skewing between the box and the pipes about a vertical axis, and then turn upwards at respective elbows towards the housing.

9. An assembly as claimed in claim 8, characterised in that the elbows are in chambers (27,28) separated from the main portion of the box, the vertical end section of each pipe passing with a close sliding fit through an aperture (31,32) which forms part of the guide means.

10. An assembly as claimed in claim 9, characterised in that the chambers provide vertical walls backing the elbows to support each pipe against a horizontal force applied thereto towards the box.

11. An assembly as claimed in any one of claims 7 to 10, wherein the box is made in two mirror image halves to be brought together and secured around the base of the housing and pipes already positioned and fitted into the housing.

12. An assembly as claimed in any one of claims 1 to 6 and as claimed in any one of claims 7 to 11.

0125010

1/5

FIG. 1.

0125010

FIG.2.

FIG. 3.

FIG. 4.

0125010

FIG. 5.

0125010

FIG.6.